# EUROPÄISCHE PATENTANMELDUNG

(11) **EP 1 325 848 A2**
(43) Veröffentlichungstag der Anmeldung: **09.07.2003**
(21) Anmeldenummer: 02027464.3
(22) Anmeldetag: 10.12.2002
(51) Int. Cl.: B60R 25/00, G07C 9/00

(54) **Diebstahlsicherer Dachlastträger**

(30) Priorität: 20.12.2001 DE 10162740
(71) Anmelder: ADAM OPEL AG, 65423 Rüsselsheim (DE)
(72) Erfinder: Pfeffer, Thomas, Dipl.-Ing., 64409 Messel (DE); Boldt, Martin, Dr.-Ing., 65468 Trebur (DE)

(57) **Zusammenfassung**

Eine Vorrichtung zur Prüfung der Nutzungsberechtigung einer Zugangskontrolleinrichtung eines Kraftfahrzeuges umfasst eine zugangsseitige Steuereinrichtung (1) mit einem ersten Speicher (3) für einen geheimen Code sowie einem zweiten Speicher (4) für die Anzahl von benutzerseitigen mit jeweils einem Transponder (5) und einem Schlüsselspeicher (6) versehenen Schlüsseln (2), denen durch Anlernen von der Steuereinrichtung (1) der geheime Code sowie der aktuelle Speicherwert des zweiten Speichers (4) zugewiesen ist, und Vergleichsmittel (9) in der Steuereinrichtung (1) zur Feststellung der für die Freigabe der Zugangskontrolleinrichtung erforderlichen Berechtigung, wobei die vom jeweiligen Transponder (5) ausgesandten Informationen jeweils mit einer in der Steuereinrichtung (1) durch den Code festgelegten Vorgabeinformationen verglichen werden. Die Steuereinrichtung (1) unterbricht beim Anlernen eines weiteren Schlüssels (8) den Anlernvorgang, aktualisiert den Speicherwert des zweiten Speichers (4) und fordert mindestens einen bereits angelernten Schlüssel (2) an, um dessen Schlüsselspeicher (6) den aktualisierten Speicherwert des zweiten Speichers (4) zuzuweisen und stellt anschließend das Anlernen des weiteren Schlüssels (8) fertig.

## Beschreibung

Die Erfindung bezieht sich auf eine Vorrichtung zur Prüfung der Nutzungsberechtigung einer Zugangskontrolleinrichtung eines Kraftfahrzeuges, mit
- einer zugangsseitigen Steuereinrichtung mit einem ersten Speicher für einen geheimen Code sowie einem zweiten Speicher für die Anzahl von benutzerseitigen mit jeweils einem Transponder und einem Schlüsselspeicher versehenen Schlüsseln, denen durch Anlernen von der Steuereinrichtung der geheime Code sowie der aktuelle Speicherwert des zweiten Speichers zugewiesen ist und
- Vergleichsmitteln in der Steuereinrichtung zur Feststellung der für die Freigabe der Zugangskontrolleinrichtung erforderlichen Berechtigung, wobei die vom jeweiligen Transponder ausgesandten Informationen jeweils mit einer in der Steuereinrichtung durch den Code festgelegten Vorgabeinformation verglichen werden.

Schließeinrichtungen für Kraftfahrzeuge haben gerade in jüngster Zeit durch die drastische Zunahme von Fahrzeugdiebstählen an erheblicher Bedeutung gewonnen. Dabei werden im Zusammenhang mit sog. Keyless-Car-Systemen zunehmend Schlüssel verwendet, die herkömmliche, leicht manipulierbare Fahrzeugschlüssel ersetzten. Ein solcher Schlüssel kann beispielsweise auch als Code-Karte ausgebildet oder in einen Handheld-Computer integriert sein. Ein moderner Schlüssel enthält als zentrales Element einen mit einem Chip gekoppelten Transponder, der bei elektromagnetischer Anregung eine Benutzercodeinformation, beispielsweise in Form einer Zahlenfolge, aussendet. In einer Steuereinrichtung wird dann verglichen, ob die vom Transponder des Schlüssels ausgesandte Benutzercodeinformation auf einen autorisierten Benutzer schließen lässt oder nicht. Nur bei Identifizierung des autorisierten Benutzers gibt die Steuereinrichtung den Zugang zu den nachgeschalteten Komponenten des Kraftfahrzeuges frei während im anderen Fall der Zugang zum Betrieb des Kraftfahrzeuges blockiert wird. Um den Besitzer des jeweiligen Schlüssels als autorisiert auszuweisen, wird in einem so genannten "Anlernprozess" dem Schlüssel ein geheimer Code von der Steuereinrichtung übertragen. Nach dem Anlernen des kompletten Schlüsselsatzes, der dem Benutzer bei der Übernahme des Kraftfahrzeuges übergeben wird, ist jeder der Schlüssel somit kennzeichnend für den autorisierten Kraftfahrzeugbenutzer.

Im Zusammenhang mit Fahrzeugdiebstählen wurde ein Missbrauch dahingehend beobachtet, dass über die rechtmäßig erhaltenen und angelernten Schlüssel hinaus weitere Schlüssel von der Steuereinrichtung des Kraftfahrzeuges angelernt wurden. Im Falle eines vorgetäuschten Fahrzeugdiebstahls wurde der Versicherung zwar ein kompletter Schlüsselsatz übergeben, dennoch konnte das angeblich entwendete Kraftfahrzeug mit einem nachträglich angelernten Schlüssel weiterbetrieben werden.

Aus der DE 196 22 720 C2 ist eine Vorrichtung zur Prüfung der Nutzungsberechtigung für Zugangskontrolleinrichtungen, insbesondere Schließeinrichtungen für Fahrzeuge, bekannt. Die Vorrichtung umfasst eine zugangsseitige Steuereinrichtung mit einem Speichermittel für einen geheimen Code und eine Anzahl von benutzerseitigen Schlüsseln, die jeweils einen Transponder enthalten, in dem der für den jeweiligen Schlüssel maßgebliche geheime Code niedergelegt ist. Des Weiteren sind Vergleichsmittel in der Steuereinrichtung zur Feststellung der für die Freigabe der Zugangseinrichtung erforderlichen Berechtigung vorgesehen, derart, dass die vom jeweiligen Transponder ausgesandten Informationen jeweils mit einer in der Steuereinrichtung durch den geheimen Code festgelegten Vorgabeinformation verglichen werden. Der für den jeweiligen Schlüssel maßgebliche geheime Code ist durch Anlernen von der Steuereinrichtung niedergelegt. Die vom jeweiligen Transponder ausgesandte Information, die von den Vergleichsmitteln in der Steuereinrichtung zur Feststellung der für die Freigabe der Zugangseinrichtung erforderlichen Berechtigung mit der in der Steuereinrichtung festgelegten Vorgabeinformation verglichen wird, besteht aus einer nach dem angelernten geheimen Code verschlüsselten Benutzercodeinformation. Die Steuereinrichtung umfasst ein weiteres Speichermittel, in dem die Anzahl der von der Steuereinrichtung angelernten Schlüssel gespeichert ist. Die Schlüssel umfassen weitere Speichermittel, in die der aktuelle Speicherwert des weiteren Speichermittels in der Steuereinrichtung bei jedem Kontakt zwischen dem jeweiligen Schlüssel und der Steuereinrichtung übernommen wird. Mit dieser Vorrichtung kann sonach festgestellt werden, wie viele Schlüssel von derselben Steuereinrichtung angelernt wurden. Der Zahlenwert dieses im Fahrzeug vorhandenen Speichers wird bei jedem Schlüsselkontakt in den weiteren im jeweiligen Schlüssel vorhandenen Speicher eingelesen, so dass mindestens einer der "rechtmäßigen" Schlüssel den aktuellen Wert entsprechend der Anzahl der angelernten Schlüssel enthält. Problematisch erweist es sich hierbei, wenn nach dem Anlernen eines unrechtmäßig hergestellten Schlüssels keine Benutzung eines der "rechtmäßigen" Schlüssel erfolgt, da dann auch die Anzahl der angelernten Schlüssel nicht in einem der "rechtmäßigen" Schlüssel gespeichert werden kann.

Es ist Aufgabe der Erfindung, eine Vorrichtung zur Prüfung der Nutzungsberechtigung einer Zugangskontrolleinrichtung eines Kraftfahrzeuges der eingangs genannten Art zu schaffen, mit der ein Missbrauch zuverlässig ausgeschlossen werden kann.

Erfindungsgemäß wird die Aufgabe dadurch gelöst, dass die Steuereinrichtung beim Anlernen eines weiteren Schlüssels den Anlernvorgang unterbricht, den Speicherwert des zweiten Speichers aktualisiert und mindestens einen bereits angelernten Schlüssel anfordert, um dessen Schlüsselspeicher den aktualisierten Speicherwert des zweiten Speichers zuzuweisen und anschließend das Anlernen des weiteren Schlüssels fertig stellt.

Aufgrund dieser Maßnahmen ist sichergestellt, dass beim Anlernen eines unrechtmäßigen Schlüssels zumindest ein "rechtmäßig" angelernter Schlüssel die Information bezüglich der aktuellen Anzahl der angelernten Schlüssel aufweist. Somit kann ein Missbrauch, also beispielsweise ein unberechtigtes Anlernen eines weiteren Schlüssels und dessen Weitergabe zum Zweck des Fahrzeugdiebstahls, auch dann nachgewiesen werden, wenn nach dem Anlernen des weiteren Schlüssels keiner der ursprünglich angelernten Schlüssel verwendet wird. Darüber hinaus ist es auch einem Zweitbenutzer des Kraftfahrzeuges, der dasselbe beispielsweise gebraucht von einem Erstbenutzer erwirbt, möglich, feststellen zu lassen, ob alle angelernten Schlüssel mit dem Kraftfahrzeug übergeben wurden.

Bevorzugt aktualisiert die Steuereinrichtung die Schlüsselspeicher aller bereits angelernten Schlüssel während des unterbrochenen Anlernvorgangs des weiteren Schlüssels. Somit ist in den Schlüsselspeichern aller Schlüssel stets die aktuelle Anzahl angelernter Schlüssel eingeschrieben.

Alternativ wird die Aufgabe erfindungsgemäß dadurch gelöst, dass die Steuereinrichtung mindestens einen weiteren Speicher zur Speicherung weiterer schlüsselund/oder kraftfahrzeugspezifischer Informationen enthält, beim Anlernen eines weiteren Schlüssels den Anlernvorgang unterbricht, den Speicherwert des weiteren Speichers aktualisiert und mindestens einen bereits angelernten Schlüssel anfordert, um dessen Schlüsselspeicher die aktualisierten Informationen des weiteren Speichers zuzuweisen und anschließend das Anlernen des weiteren Schlüssels fertig stellt.

Auch mittels dieser Maßnahmen kann aufgrund der Informationen, die in einem bereits angelernten Schlüssel bei einer Unterbrechung des Anlernvorgangs eines weiteren Schlüssels gespeichert werden, ein Missbrauch zuverlässig ausgeschlossen werden. Die Informationen umfassen beispielsweise das Datum des aktuellen Anlernprozesses oder eine schlüsselindividuelle Kennzahl, die auch von der Steuereinrichtung vergeben werden kann. Der Vergleich der aktualisierten Informationen mit den bereits vorhanden, in einem Schlüsselspeicher eines "rechtmäßig" angelernten Schlüssels gespeicherten Informationen lässt bei einem Fahrzeugdiebstahl Rückschlüsse auf einen Missbrauch zu.

Zweckmäßigerweise ist als schlüsselspezifische Information die Anzahl der jemals von der Steuereinrichtung angelernten Schlüssel und/oder die Anzahl gelöschter Schlüssel in dem weiteren Speicher hinterlegt. Somit lässt sich stets feststellen, wie viele angelernte Schlüssel im Umlauf sind.

Um einen angelernten Schlüssel unmanipulierbar einem bestimmten Kraftfahrzeug zuzuordnen, ist als kraftfahrzeugspezifische Information eine Fahrgestellnummer des Kraftfahrzeuges in den weiteren Speicher eingeschrieben. Wird beispielsweise die Fahrgestellnummer des Kraftfahrzeuges geändert und stimmt daraufhin nicht mehr mit der im Schlüsselspeicher hinterlegten Fahrgestellnummer überein, so deutet dies auf einen möglichen Versicherungsbetrug hin.

Zweckmäßigerweise erfolgt beim Anlernen jedes weiteren Schlüssels eine Speicherung einer dem jeweiligen Schlüssel zugewiesenen Service-Information in dem Schlüsselspeicher und/oder einem Speichermodul der Steuereinrichtung. Die Service-Information lässt Rückschlüsse auf den Anlernvorgang des Schlüssels zu.

Um neben dem in den Anlernvorgang integrierten Schlüssel auch weitere benutzte Schlüssel mit sicherheitsrelevanten Informationen zu versehen, überträgt die Steuereinrichtung die Service-Information bei der Benutzung eines zuvor angelernten Schlüssels an dessen Schlüsselspeicher.

Vorzugsweise ist die Service-Information ein geheimer Kenncode einer Werkstatt oder eines Benutzers. Aufgrund des Kenncodes, der beim Anlernvorgang der Steuereinrichtung zur Verfügung gestellt werden muss, lässt sich zurückverfolgen, wer für das Anlernen eines Schlüssels verantwortlich ist.

Zur Archivierung weiterer Daten dient die Steuereinrichtung auch zur Speicherung variabler Daten, die diese Daten bei der Benutzung eines der angelernten Schlüssel in den Schlüsselspeicher des jeweiligen Schlüssels einschreibt. Bevorzugt erfasst die Steuereinrichtung als variable Daten einen aktuellen Kilometerstand des Kraftfahrzeuges und/oder ein Datum einer letztmaligen Benutzung eines bestimmten Schlüssels.

Zweckmäßigerweise dient eine externe Auswerteeinrichtung zum Auslesen des Speicherwertes, der schlüssel- und/oder kraftfahrzeugspezifischen Informationen, der Service-Informationen und oder der variablen Daten aus mindestens einem der Schlüssel und/oder der Steuereinrichtung. Diese Auswerteeinrichtung kann beispielsweise von einem Kraftfahrzeugherstellers oder einer Versicherung benutzt werden, um gegebenenfalls einen Versicherungsbetrug oder eine unrechtmäßige Manipulation nachzuweisen.

Um eine berührungslose Verbindung bereitstellen, erfolgt die Kopplung zwischen der Steuereinrichtung und/oder einem der Schlüssel und/oder der Auswerteeinrichtung kapazitiv und/oder induktiv.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

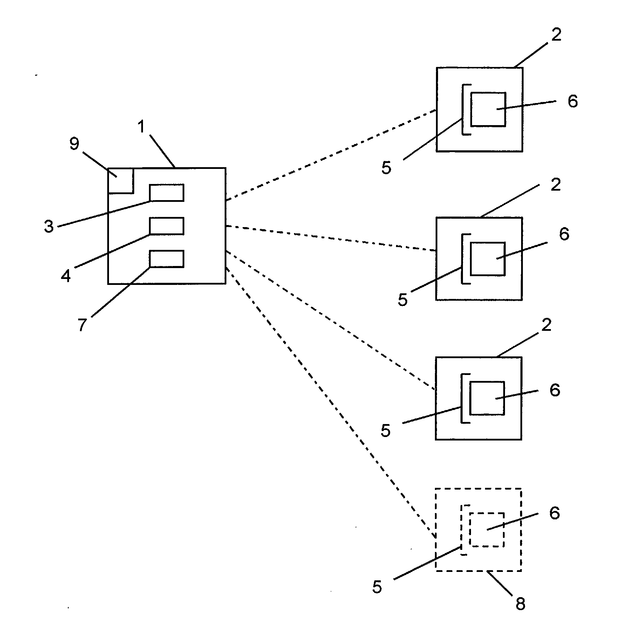

Die Erfindung wird im Folgenden anhand eines Ausführungsbeispieles unter Bezugnahme auf die zugehörige Zeichnung näher erläutert. Die einzige Fig. zeigt eine schematische Darstellung der erfindungsgemäßen Vorrichtung.

Die Vorrichtung zur Prüfung der Nutzungsberechtigung einer Zugangskontrolleinrichtung eines Kraftfahrzeuges weist eine in dem Kraftfahrzeug installierte Steuereinrichtung 1 mit zugeordneten Schlüsseln 2 auf. Die Steuereinrichtung 1 umfasst einen ersten Speicher 3 für einen geheimen Code sowie einen zweiten Speicher 4, in dem die Anzahl der der Steuereinrichtung 1 zugeordneten Schlüssel 2 hinterlegt ist. Den jeweils mit einem Transponder 5 sowie einem Schlüsselspeicher 6 ausgestatteten Schlüsseln 2 wird in einem Anlernvorgang der geheime Code des ersten Speichers 3 der Steuereinrichtung 1 zugewiesen. Vergleichsmittel 9 der Steuereinrichtung 1 stellen die für die Freigabe der Zugangskontrolleinrichtung erforderliche Berechtigung durch einen Vergleich des geheimen Codes des Schlüsselspeichers 6 des Schlüssels 2 mit durch den Code des ersten Speichers 3 der Steuereinrichtung 1 festgelegten Vorgabeinformationen fest. Darüber hinaus ist der Steuereinrichtung 1 ein weiterer Speicher 7 zugeordnet, in dem schlüssel- und/oder kraftfahrzeugspezifische Informationen hinterlegt sind.

Falls es erforderlich ist, einen weiteren Schlüssel 8, der gestrichelt dargestellt ist, durch die Steuereinrichtung 1 anzulernen, muss dieser Schlüssel 8 zur Übermittlung des geheimen Codes des ersten Speichers 3 mit der Steuereinrichtung 1 gekoppelt werden. Hierbei aktualisiert die Steuereinrichtung 1 den Wert des zweiten Speichers 4, indem sie zu dem bereits vorhandenen Wert, der der Anzahl der bereits angelernten Schlüssel 2 entspricht, eins addiert. Bevor die Steuereinrichtung 1 den Anlernvorgang des weiteren Schlüssels 8 fertig stellt, fordert sie einen der bereits angelernten Schlüssel 2 an und schreibt den aktualisierten Wert des zweiten Speichers 4 in dessen Schlüsselspeicher 6 und stellt anschließend das Anlernen des weiteren Schlüssels 8 fertig. Somit enthält einer der rechtmäßig angelernten Schlüssel 2 stets den aktuellen Wert der jemals angelernten Schlüssel 2, 8.

Im Weiteren ist vor dem Anlernvorgang des weiteren Schlüssels 8 ein geheimer Kenncode an die Steuereinrichtung 1 zu übermitteln, die diese Service-Information in den weiteren Speicher 7 einschreibt und beim Anlernen sowohl in den Schlüsselspeicher 6 des angeforderten Schlüssels 2 als auch in den des anzulernenden, weiteren Schlüssels 8 überträgt. Autorisierten Werkstätten werden individuelle Kenncodes zugewiesen, wonach feststellbar ist, welche Werkstatt das Anlernen des weiteren Schlüssels 8 bewerkstelligt hat. Des Weiteren werden in dem weiteren Speicher 7 die Fahrgestellnummer sowie der aktuelle Kilometerstand des Kraftfahrzeuges und das Datum des Anlernvorgangs des weiteren Schlüssels 8 gespeichert und an den weiteren Schlüssel 8 sowie den in den Anlernvorgang einbezogenen Schlüssel 2 übermittelt. Darüber hinaus wird in dem weiteren Speicher 7 die Anzahl gelöschter Schlüssel 2, 8 festgehalten. Das Löschen eines Schlüssels 2, 8 im Fall eines Verlusts desselben ist durch die Eingabe des Kenncodes zu bestätigen, so dass eine Rückverfolgung auf den Löschenden gewährleistet ist. Falls ein Anlernen eines weiteren Schlüssels 8 ohne die Eingabe eines Kenncodes erfolgt, so lässt dies auf einen unrechtmäßigen Anlernvorgang schließen.

Um alle benutzten Schlüssel 2, 8 mit aktuellen Informationen zu versorgen, schreibt die Steuereinrichtung die zuvor genannten aktualisierten Daten des zweiten Speichers 4 und des weiteren Speichers 7 bei jeder Benutzung eines Schlüssels 2, 8 in dessen Schlüsselspeicher.

### Bezugszeichenliste

- 1.: Steuereinrichtung
- 2.: Schlüssel
- 3.: erster Speicher
- 4.: zweiten Speicher
- 5.: Transponder
- 6.: Schlüsselspeicher
- 7.: weiterer Speicher
- 8.: weiterer Schlüssel
- 9.: Vergleichsmittel

## Patentansprüche

1. Vorrichtung zur Prüfung der Nutzungsberechtigung einer Zugangskontrolleinrichtung eines Kraftfahrzeuges, mit
- einer zugangsseitigen Steuereinrichtung (1) mit einem ersten Speicher (3) für einen geheimen Code sowie einem zweiten Speicher (4) für die Anzahl von benutzerseitigen mit jeweils einem Transponder (5) und einem Schlüsselspeicher (6) versehenen Schlüsseln (2), denen durch Anlernen von der Steuereinrichtung (1) der geheime Code sowie der aktuelle Speicherwert des zweiten Speichers (4) zugewiesen ist und
- Vergleichsmitteln (9) in der Steuereinrichtung (1) zur Feststellung der für die Freigabe der Zugangskontrolleinrichtung erforderlichen Berechtigung, wobei die vom jeweiligen Transponder (5) ausgesandten Informationen jeweils mit einer in der Steuereinrichtung (1) durch den Code festgelegten Vorgabeinformationen verglichen werden,
**dadurch gekennzeichnet, dass** die Steuereinrichtung (1) beim Anlernen eines weiteren Schlüssels (8) den Anlernvorgang unterbricht, den Speicherwert des zweiten Speichers (4) aktualisiert und mindestens einen bereits angelernten Schlüssel (2) anfordert, um dessen Schlüsselspeicher (6) den aktualisierten Speicherwert des zweiten Speichers (4) zuzuweisen und anschließend das Anlernen des weiteren Schlüssels (8) fertig stellt.

2. Vorrichtung nach Anspruch 1, **dadurch gekennzeichnet, dass** die Steuereinrichtung (1) die Schlüsselspeicher (6) aller bereits angelernten Schlüssel (2) während des unterbrochenen Anlernvorgangs des weiteren Schlüssels (8) aktualisiert.

3. Vorrichtung nach dem Oberbegriff des Anspruchs 1, **dadurch gekennzeichnet, dass** die Steuereinrichtung (1) mindestens einen weiteren Speicher (7) zur Speicherung weiterer schlüssel- und/oder kraftfahrzeugspezifischer Informationen enthält, beim Anlernen eines weiteren Schlüssels (8) den Anlernvorgang unterbricht, den Speicherwert des weiteren Speichers (7) aktualisiert und mindestens einen bereits angelernten Schlüssel (2) anfordert, um dessen Schlüsselspeicher (6) die aktualisierten Informationen des weiteren Speichers (7) zuzuweisen und anschließend das Anlernen des weiteren Schlüssels (8) fertig stellt.

4. Vorrichtung nach Anspruch 3, **dadurch gekennzeichnet, dass** als schlüsselspezifische Information die Anzahl der jemals von der Steuereinrichtung (1) angelernten Schlüssel (2, 8) und/oder die Anzahl gelöschter Schlüssel in dem weiteren Speicher (7) hinterlegt ist.

5. Vorrichtung nach Anspruch 3, **dadurch gekennzeichnet, dass** als kraftfahrzeugspezifische Information eine Fahrgestellnummer des Kraftfahrzeuges in den weiteren Speicher (7) eingeschrieben ist.

6. Vorrichtung nach einem der Ansprüche 1 bis 3, **dadurch gekennzeichnet, dass** beim Anlernen jedes weiteren Schlüssels (8) eine Speicherung einer dem jeweiligen Schlüssel (8) zugewiesenen Service-Information in dem Schlüsselspeicher (6) und/oder einem Speichermodul der Steuereinrichtung (1) erfolgt.

7. Vorrichtung nach Anspruch 6, **dadurch gekennzeichnet, dass** die Steuereinrichtung (1) die Service-Information bei der Benutzung eines zuvor angelernten Schlüssels (2) an dessen Schlüsselspeicher (6) überträgt.

8. Vorrichtung nach Anspruch 6 oder 7, **dadurch gekennzeichnet, dass** die Service-Information ein geheimer Kenncode einer Werkstatt oder eines Benutzers ist.

9. Vorrichtung nach einem der Ansprüche 1 bis 8, **dadurch gekennzeichnet, dass** die Steuereinrichtung (1) zur Speicherung variabler Daten dient und diese Daten bei der Benutzung eines der angelernten Schlüssel (2, 8) in den Schlüsselspeicher (6) des jeweiligen Schlüssels (2, 8) einschreibt.

10. Vorrichtung nach Anspruch 9, **dadurch gekennzeichnet, dass** die Steuereinrichtung (1) als variable Daten einen aktuellen Kilometerstand des Kraftfahrzeuges und/oder ein Datum einer letztmaligen Benutzung eines bestimmten Schlüssels (2, 8) erfasst.

11. Vorrichtung nach einem der Ansprüche 1 bis 10, **dadurch gekennzeichnet, dass** eine externe Auswerteeinrichtung zum Auslesen des Speicherwertes, der schlüssel- und/oder kraftfahrzeugspezifischen Informationen, der Service-Informationen und oder der variablen Daten aus mindestens einem der Schlüssel (2, 8) und/oder der Steuereinrichtung (1) dient.

12. Vorrichtung nach einem der Ansprüche 1 bis 11, **dadurch gekennzeichnet, dass** die Kopplung zwischen der Steuereinrichtung (1) und/oder einem der Schlüssel (2, 8) und/oder der Auswerteeinrichtung kapazitiv und/oder induktiv erfolgt.
